# EUROPÄISCHE PATENTANMELDUNG

(11) **EP 3 064 422 A1**
(43) Veröffentlichungstag der Anmeldung: **07.09.2016**
(21) Anmeldenummer: 16150993.0
(22) Anmeldetag: 13.01.2016
(51) Int. Cl.: B62M 6/45, B62M 1/10, B62M 1/28

(54) **ANTRIEB FÜR EIN PEDALGETRIEBENES FAHRZEUG**

(30) Priorität: 05.03.2015 DE 102015203896
(71) Anmelder: ROBERT BOSCH GMBH, 70442 Stuttgart (DE)
(72) Erfinder: Kimmich, Peter, 71144 Steinenbronn (DE); Braun, Sigmund, 72127 Kusterdingen (DE); Kaechele, Uwe, 72813 St. Johann-Wuertingen (DE); Schock, Wolfram, 72770 Ohmenhausen (DE)

(57) **Zusammenfassung**

Die Erfindung betrifft einen Linear-Antrieb eines pedalgetriebenen Fahrzeugs, umfassend wenigstens ein erstes Pedal (2), wenigstens eine erste Umlenkrolle (4) und eine zweite Umlenkrolle (5), wenigstens ein um die erste Umlenkrolle (4) und die zweite Umlenkrolle (5) umlaufendes Zugmittel (6), eine elektrische Maschine (9) mit einer Rotationswelle (19), wobei die Rotationswelle (19) mit der ersten Umlenkrolle (4) verbunden ist, und eine Steuereinheit (16), welche eingerichtet ist, die elektrische Maschine (9) als Generator oder als Elektromotor zu betreiben.

## Beschreibung

### Stand der Technik

Die vorliegende Erfindung betrifft einen linearen Tretantrieb mit einer elektrischen Maschine, welche mittels einer Steuereinheit als Generator oder als Elektromotor betreibbar ist. Der erfindungsgemäße Linear-Antrieb ist vorzugsweise für ein pedalgetriebenes Fahrzeug, insbesondere ein motorisch und/oder mit Muskelkraft betreibbares Fahrzeug, wie z.B. ein Elektrofahrrad oder ein Cargo-Fahrrad, vorgesehen.

In jüngster Zeit werden verstärkt neben normalen Fahrrädern auch Elektrofahrräder am Markt angeboten, welche mittels motorischer und/oder Pedalkraft durch Fahrer angetrieben werden können. Ein üblicher Fahrradantrieb wird dabei durch eine Kreisbewegung durch Betätigung eines Kurbeltriebs realisiert. Das vom Radfahrer erzeugte Drehmoment wird dann über eine Kette oder einen Zahnriemen oder eine Kardanwelle oder dgl. an ein Hinterrad des Fahrzeugs übertragen. Durch die notwendige Kreisbewegung am Kurbeltrieb nehmen derartige Antriebe einen relativ großen Bauraum ein. Auch ist es häufig notwendig, Verkleidungen im Bereich des Kurbeltriebs vorzusehen, um Füße und Beine des Radfahrers zu schützen. Aus der DE 4015491 A1 ist ein Linear-Tretantrieb für Fahrräder bekannt, bei welchem eine Vielzahl von Umlenkrädern und eine Vielzahl von Zugmitteln vorgesehen sind. Die gegensinnig drehenden Antriebskettenräder sind dabei mittels Freiläufen mit einem Abtriebskettenrad verbunden, um eine ständige Drehrichtungsänderung der Antriebskettenräder auf das Abtriebskettenrad mit gleichem Drehsinn zu übertragen. Dieser bekannte Antrieb ist relativ kompliziert und wartungsintensiv und nimmt insbesondere einen sehr großen Bauraum ein.

### Offenbarung der Erfindung

Der erfindungsgemäße Linear-Antrieb eines pedalgetriebenen Fahrzeugs mit den Merkmalen des Anspruchs 1 weist demgegenüber den Vorteil auf, dass er einen einfachen und kostengünstigen Aufbau und insbesondere einen sehr platzsparenden Aufbau aufweist. Darüber hinaus können benötigte mechanische Vorrichtungen reduziert werden, was das Gewicht und die Komplexität des Antriebssystems reduziert. Auch werden weniger mechanische Bauteile benötigt, so dass entsprechend Geräusche und ein Verschleiß reduziert sind. Weiterhin kann ein Fahrer das pedalgetriebene Fahrzeug über einen langen Zeitraum mittels Muskelkraft antreiben. Ein Fahrer kann üblicherweise eine Leistung von mehr als 250 W nur über einige Minuten erbringen, etwas geringere Leistung von ca. 180 W dagegen über Stunden. Bei einer Nutzung des pedalgetriebenen Fahrzeugs bedeutet dies, dass z.B. beim Beschleunigen des Fahrzeugs z.B. im Stadtverkehr nach einem Ampelstopp oder dgl. ein hoher Leistungsbedarf von über 400 W für kurze Zeit notwendig ist. Dadurch wird ein Fahrer erschöpft. Würde der Fahrer stattdessen die ganze Zeit, auch während des Anhaltens des Fahrzeugs mit ca. 180 W treten, wäre er nicht erschöpft und eine zusätzlich erbrachte Energie könnte gespeichert werden und dann für einen Start des Fahrzeugs genutzt werden. Dies ist erfindungsgemäß dadurch möglich, dass eine elektrische Maschine vorgesehen ist, welche mit einer Umlenkrolle des Fahrzeugs verbunden ist. Das pedalgetriebene Fahrzeug umfasst dabei wenigstens ein Pedal, wenigstens eine erste und zweite Umlenkrolle und ein die beiden Umlenkrollen verbindendes Zugmittel, z.B. eine Kette oder dgl. Das erste Pedal ist dabei an einem ersten Führungselement geführt. Die elektrische Maschine ist nun mit einer der Umlenkrollen verbunden und kann z.B. im Stillstand des Fahrzeugs als Generator betrieben werden, so dass ein Tretvorgang des Fahrers die elektrische Maschine generatorisch betreibt und die erzeugte Energie kann dann gespeichert werden und für einen Start des Fahrzeugs verwendet werden.

Die Unteransprüche zeigen bevorzugte Weiterbildungen der Erfindung.

Vorzugsweise ist die Steuereinheit eingerichtet, die elektrische Maschine in Abhängigkeit einer Position des Pedals zu betreiben. Somit kann abhängig von der Pedalposition die Steuereinheit die elektrische Maschine als Generator oder als Elektromotor betreiben. Beim Betreiben als Elektromotor kann beispielsweise eine Unterstützung des Fahrers erfolgen, wenn dieser z.B. bei einem stark abgeknickten Bein das Pedal betätigen will. Sobald ein Beinwinkel zwischen Oberschenkel und Unterschenkel des Fahrers einen Wert eingenommen hat, in welchem der Fahrer eine große Kraft auf das Pedal ausüben kann, kann dann die Steuereinheit die Unterstützung durch die elektrische Maschine beenden. Wenn ein Fahrer in Abhängigkeit einer Position des Pedals mehr Kraft als für einen Vortrieb notwendig aufbringt, kann die Steuereinheit auch bestimmen, dass nun die elektrische Maschine als Generator betrieben wird. Somit kann die Steuereinheit in Abhängigkeit der Pedalposition auch innerhalb eines Hubes bestimmen, dass ein Wechsel der Betriebsart der elektrischen Maschine vom Generator zum Elektromotor und umgekehrt vorkommt. Dies kann während eines linearen Pedalweges auch mehrfach erfolgen. Somit kann eine optimale Unterstützung des Fahrers und eine optimale Ausnutzung der vom Fahrer auf das Pedal aufgebrachten Kraft ermöglicht werden.

Gemäß einer weiteren bevorzugten Ausgestaltung der Erfindung ist die Steuereinheit eingerichtet, die elektrische Maschine vor Erreichen eines Umkehrpunktes des Linear-Antriebs als Generator zu betreiben. Vorzugsweise wird die elektrische Maschine dabei kurz vor Erreichen des Umkehrpunktes als Generator betrieben. Dadurch kann eine optimale Kraftausnutzung einer vom Fahrer auf das Pedal aufgebrachten Kraft erreicht werden, da kurz vor Erreichen des Umkehrpunkts die Geschwindigkeit des Pedals sowieso reduziert werden muss und ein Hauptanteil der Kraft des Fahrers dann in elektrische Energie umgewandelt werden kann.

Weiter bevorzugt ist die Steuereinheit eingerichtet, die elektrische Maschine in Abhängigkeit einer Pedalgeschwindigkeit anzusteuern. Wenn die Pedalgeschwindigkeit über einem vorbestimmten Wert liegt, wird die Steuereinheit die elektrische Maschine derart ansteuern, dass die elektrische Maschine als Generator betrieben wird. Dadurch kann eine Energiegewinnung zu Pedalgeschwindigkeiten bzw. Beingeschwindigkeiten des Fahrers verlagert werden, an denen die Beine des Fahrers eine hohe Leistung am Pedal erbringen.

Besonders bevorzugt ist die Steuereinheit des Linear-Antriebs eingerichtet, die elektrische Maschine nach Erreichen eines Umkehrpunkts des Linear-Antriebs als Elektromotor zu betreiben. Dadurch kann der Linear-Antrieb nach den Umkehrpunkten schnell wieder auf eine Geschwindigkeit beschleunigt werden, bei der die elektrische Maschine wieder als Generator in einem Arbeitspunkt mit guter Effizienz arbeiten kann.

Vorzugsweise ist die Steuereinheit ferner eingerichtet, eine Position des Pedals, basierend auf einer Rotation der elektrischen Maschine, zu ermitteln. Durch Erfassen der Rotation der elektrischen Maschine kann auf einfache Weise eine Pedalposition bestimmt werden.

Vorzugsweise ist die Steuereinheit ferner eingerichtet, die elektrische Maschine, basierend auf einer Trittfrequenz des Fahrers, als Generator oder Elektromotor zu betreiben. Insbesondere kann eine Trittfrequenz durch Unterstützung der elektrischen Maschine im Elektromotorbetrieb oder durch Betreiben der elektrischen Maschine im Generatorbetrieb an eine Trittfrequenz angepasst werden, bei welcher ein Fahrer eine möglichst hohe Leistung abgeben kann.

Durch die Steuereinheit kann somit insbesondere auch vermieden werden, dass der Fahrer ungesunde Körperhaltungen wie z.B. zu stark abgewinkelte Knie bei hoher Belastung oder dgl., während des Fahrens einnimmt, da entsprechend eine Unterstützung durch die elektrische Maschine im Elektromotorbetrieb oder ein erhöhter Widerstand durch die elektrische Maschine im Generatorbetrieb erzeugt werden kann.

Vorzugsweise wird eine Position des Pedals des Linear-Antriebs mittels eines Positionssensors und/oder eine Bewegungsgeschwindigkeit des Pedals mittels eines Geschwindigkeitssensors am Linear-Antrieb erfasst.

Vorzugsweise umfasst das pedalgetriebene Fahrzeug ein zweites Pedal, welches ebenfalls mit dem Zugmittel verbunden ist. Das zweite Pedal ist dabei an einem zweiten Führungselement geführt.

Besonders bevorzugt ist ein Führungselement des Pedals als lineare Führungsstange oder lineare Führungsnut ausgebildet.

Weiter bevorzugt umfasst der Linear-Antrieb wenigstens ein Rückstellelement, um den Linear-Antrieb automatisch in eine Ausgangsposition bzw. Ruheposition zurückzustellen. Das Rückstellelement kann beispielsweise als Federelement als separates Bauteil vorgesehen sein, oder Bauteile des Linear-Antriebs, wie z.B. das Zugmittel, oder Lagerbauteile von Umlenkrollen oder Fixierung der Pedale am Zugmittel können federnde Eigenschaften aufweisen.

Ferner betrifft die vorliegende Erfindung ein motorisch und/oder mit Muskelkraft betreibbares Fahrzeug mit einem erfindungsgemäßen Linear-Antrieb. Das Fahrzeug ist vorzugsweise ein Elektrofahrrad, z.B. ein Pedelec oder Cargo-Bike oder dgl., mit elektrischem Antrieb.

Ferner betrifft die vorliegende Erfindung ein Verfahren zum Betreiben eines Linear-Antriebs eines pedalgetriebenen Fahrzeugs, wobei der Linear-Antrieb wenigstens ein Pedal, vorzugsweise zwei Pedale, ein über Umlenkrollen geführtes Zugmittel, eine elektrische Maschine und eine Steuereinheit aufweist. Das erfindungsgemäße Verfahren ist dabei derart ausgestaltet, dass die Steuereinheit die elektrische Maschine als Generator oder als Elektromotor betreibt. Somit kann die elektrische Maschine einerseits bei Elektromotorbetrieb den Linear-Antrieb unterstützen und andererseits kann Energie im Generatorbetrieb gewonnen werden, welche z.B. im Betrieb des Linear-Antriebs ansonsten in nicht verwendbare Reibung oder Wärme oder dgl. umgewandelt werden würde.

Das erfindungsgemäße Verfahren ist vorzugsweise derart ausgeführt, dass die Steuereinheit die elektrische Maschine in Abhängigkeit einer Position des Pedals, insbesondere einer Position nahe Umlenkpunkten des Linear-Antriebs, und/oder einer Bewegungsgeschwindigkeit des Pedals und/oder einer Trittfrequenz des Fahrers als Generator oder Elektromotor steuert.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines linearen Antriebs für ein pedalgetriebenes Fahrzeug gemäß einem ersten Ausführungsbeispiel der Erfindung,
- Figur 2: eine schematische Darstellung eines beispielhaften Verlaufs der von der elektrischen Maschine auf das Zugmittel ausgeübten Kraft,
- Figur 3: schematische Darstellungen der jeweiligen Beinpositionen eines Fahrers entsprechend den in Figur 2 gezeigten Positionen, und
- Figur 4: eine schematische Ansicht eines Antriebs gemäß einem zweiten Ausführungsbeispiel der Erfindung.

### Bevorzugte Ausführungsformen der Erfindung

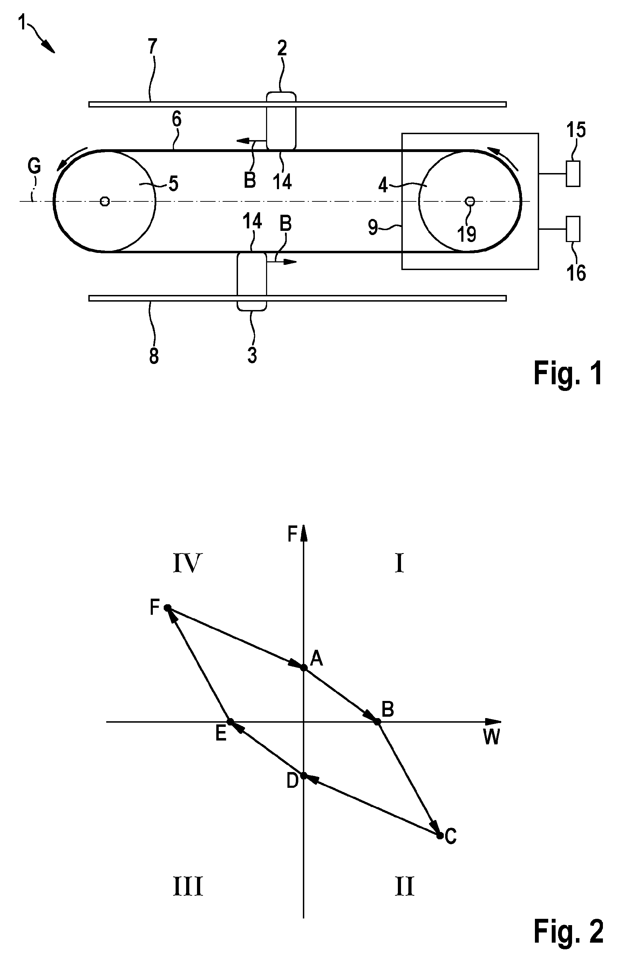

Nachfolgend wird unter Bezugnahme auf die Figuren 1 bis 3 ein Linear-Antrieb 1 für ein pedalgetriebenes Fahrzeug im Detail beschrieben.

Wie aus Figur 1 ersichtlich ist, umfasst der lineare Antrieb ein erstes Pedal 2 und ein zweites Pedal 3, welche jeweils an Fixierbereichen 14 mit einem Zugmittel 6 verbunden sind. Das Zugmittel 6 ist beispielsweise eine umlaufende Kette oder ein umlaufend geschlossenes Seil. Ferner umfasst der Antrieb 1 eine erste Umlenkrolle 4 und eine zweite Umlenkrolle 5, um welche das Zugmittel 6 umläuft (vgl. Figur 1).

Ferner ist eine elektrische Maschine 9 vorgesehen, welche sowohl als Generator als auch als Elektromotor verwendet werden kann. Ein elektrischer Speicher 15, z.B. ein Akku, ist mit der elektrischen Maschine 9 verbunden, um elektrische Energie zu speichern, welche durch Generatorbetrieb der elektrischen Maschine 9 erhalten wird. Weiterhin ist eine Steuereinheit 16 vorgesehen, welche eingerichtet ist, die elektrische Maschine 9 als Generator oder als Elektromotor zu betreiben.

Wie weiter aus Figur 1 ersichtlich ist, sind das erste Pedal 2 an einem ersten Führungselement 7 und das zweite Pedal 3 an einem zweiten Führungselement 8 geführt. Das erste und zweite Führungselement 7, 8 sind dabei als gerade, stangenförmige Führungselemente ausgebildet und ermöglichen die Linearbewegung der ersten und zweiten Pedale 2, 3, wenn ein Fahrer diese betätigt. Eine Gerade G durch Mittelpunkte der Umlenkrollen 4, 5 verläuft parallel zu den Führungselementen 7, 8.

Die Anordnung der Führungselemente 7, 8 und somit des gesamten Antriebs 1 kann dabei in horizontaler Lage oder auch in vertikaler Lage sein. Der Antrieb kann auch in einer Zwischenposition zwischen diesen beiden Extrempositionen angeordnet sein.

Die elektrische Maschine 9 ist über eine Welle 19 der elektrischen Maschine mit der ersten Umlenkrolle 4 verbunden. Dadurch kann eine Rotation der ersten Umlenkrolle 4 auf die Welle 19 der elektrischen Maschine übertragen werden und in der elektrischen Maschine in elektrischen Strom umgewandelt werden und im Speicher 15 gespeichert werden.

Die Funktion des erfindungsgemäßen Antriebs für ein pedalgetriebenes Fahrzeug, wie z.B. ein Elektrofahrrad, ist dabei wie folgt. Figur 1 zeigt eine Ruhelage des Antriebs 1. Wenn ein Fahrer auf das erste Pedal 2 tritt, was in Figur 1 durch den Pfeil A angedeutet ist, bewegt sich das zweite Pedal 3 in Richtung des Pfeils B, da die Pedale 2, 3 über das Zugmittel 6 miteinander verbunden sind. Die vom Fahrer aufgebrachte Kraft kann dann beispielsweise an der zweiten Umlenkrolle 5 für einen Vortrieb des Fahrzeugs genutzt werden. Die Pedale 2, 3 werden dabei linear entlang der Führungselemente 7, 8 bewegt. Sobald eine Endposition erreicht ist, kann der Fahrer nun das zweite Pedal 3 treten, so dass sich die Drehrichtung des Zugmittels 6 umkehrt. Damit das Fahrzeug im Bereich der zweiten Umlenkrolle 5 nicht rückwärts angetrieben wird, ist hier z.B. ein Freilauf und eine Einrichtung zur Drehrichtungsumkehr vorgesehen, um von einer Abtriebswelle eine gleiche Drehrichtung für den Vortrieb des Fahrzeugs zu haben.

Durch die Rückbewegung des Zugmittels 6 wird ebenfalls die erste Umlenkrolle 4 betrieben, welche über die Welle 19 dann beispielsweise einen generatorischen Betrieb der elektrischen Maschine 9 bewirken kann, um elektrische Energie zu erzeugen. Dies kann dann durch die elektrische Maschine selbst in einen Antrieb des Fahrzeugs umgewandelt werden oder alternativ ist eine zweite elektrische Maschine vorgesehen, um das Fahrzeug anzutreiben, wobei der im Speicher 15 gespeicherte elektrische Strom verwendet wird.

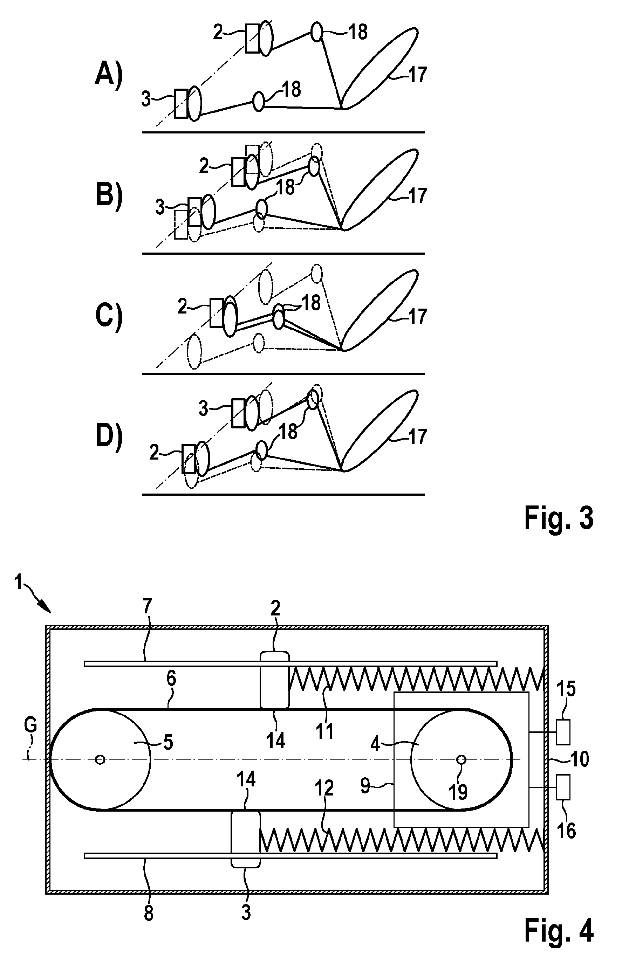

In den Figuren 2 und 3 ist die erfindungsgemäße Ansteuerung der elektrischen Maschine im Detail dargestellt. Wie aus Figur 2 ersichtlich ist, ist ausgehend von einem oberen Totpunkt A des Pedals 2 im Sektor I des in Figur 2 gezeigten Diagramms, welches die Kraft F, die von der elektrischen Maschine aufgebracht wird, über einem Wirkungsgrad W der elektrischen Maschine darstellt, beschrieben. Um eine möglichst leichte Bewegung des Pedals 2, ausgehend vom oberen Totpunkt A zu ermöglichen, wird im Sektor I eine Unterstützung durch die elektrische Maschine bereitgestellt, welche durch den Pfeil A zu B angedeutet ist. Die Steuereinheit 16 steuert dabei die elektrische Maschine positionsabhängig, basierend auf einer Position des Pedals 2. In Figur 3 ist in der obersten Darstellung am Punkt A die Pedalstellung am oberen Totpunkt eingezeichnet. Das zweite Pedal, welches aus Übersichtlichkeitsgründen nicht in Figur 3 eingezeichnet ist, befindet sich dabei am unteren Totpunkt D.

Die elektromotorische Unterstützung der elektrischen Maschine 9 wird dann nach Zurücklegen eines vorbestimmten Weges, d.h., Erreichen einer vorbestimmten Position des Pedals 2 beendet. Dieser Punkt ist in Figur 2 mit B bezeichnet. Ausgehend vom Punkt B ist nach dem oberen Totpunkt somit eine Geschwindigkeit des Linear-Antriebs noch gering und auch ein Wirkungsgrad W bei einem Generatorbetrieb der elektrischen Maschine 9 gering. Die vom elektrischen Antrieb abgegebene Kraft F ist dabei Null, um ein Bein eines Fahrers 17 nicht an einer Beschleunigung zu hindern.

Im Punkt C ist eine Mittelposition des Pedals 2 zwischen dem oberen Totpunkt und dem unteren Totpunkt erreicht. Eine Geschwindigkeit des Pedals ist dabei maximal und ein Wirkungsgrad W der elektrischen Maschine im Generatorbetrieb groß. Die Kraft F ist negativ, um Energie durch den Linear-Antrieb zu gewinnen.

Kurz vor dem unteren Totpunkt D geht die Geschwindigkeit des Pedals 2 wieder in Richtung Null, die Kraft F der elektrischen Maschine ist immer noch negativ, da das Bein des Fahrers 17 eine hohe Kraft erzeugen kann und das Pedal 2 am unteren Totpunkt D gestoppt wird.

Bei der Rückkehr des Pedals 2 vom unteren Totpunkt D zum oberen Totpunkt A wird nun der gleiche Zyklus mit dem zweiten Pedal 3 erreicht, was in Figur 2 durch die Spiegelung der Pfeile an der Achse F eingezeichnet ist. Im Sektor III wird das zweite Pedal 3 wieder motorisch angetrieben und im Sektor IV kann wieder ein Generatorbetrieb ermöglicht werden, bis das zweite Pedal 3 wieder am unteren Totpunkt und das erste Pedal 2 wieder am oberen Totpunkt A positioniert ist.

In Figur 3 ist ein Torso 17 des Fahrers, Knie 18, ein linker Fuß 21 und ein rechter Fuß 22 jeweils an den Positionen A, B, C und D dargestellt. Die Ausgangsposition A (oberer Totpunkt des Pedals 2) ist in den Positionen B, C und D jeweils gestrichelt dargestellt.

Somit kann erfindungsgemäß ein Linear-Antrieb bereitgestellt werden, welcher eine elektrische Maschine 9 umfasst, die als Generator oder als Elektromotor betrieben werden kann, um eine Kraft auf das Zugmittel 6 in Abhängigkeit einer Pedalposition und/oder in Abhängigkeit einer Bewegungsgeschwindigkeit ausüben kann. Hierdurch kann erfindungsgemäß insbesondere eine Unterstützung des Linear-Antriebs in den Positionen nach einer Richtungsumkehr an den Umkehrpunkten des unteren und oberen Totpunkts der Pedale erreicht werden. Ferner können auch ungesunde Körperhaltungen, z.B. stark abgewinkelte Knie 18, bei hoher Belastung durch den elektromotorischen Betrieb der elektrischen Maschine 9 abgemildert werden. Eine Energiegewinnung aus Betätigung des Linear-Antriebs durch den Fahrer 17 kann ferner zu Beingeschwindigkeiten verlagert werden, bei denen die elektrische Maschine 9 in einem effizienten Arbeitspunkt arbeitet oder zu Beinpositionen verlagert werden, an denen die Beine sowieso abgebremst werden müssen, z.B. kurz vor Erreichen des unteren und oberen Totpunkts.

Figur 4 zeigt einen Antrieb 1 gemäß einem zweiten Ausführungsbeispiel der Erfindung. Im Unterschied zum ersten Ausführungsbeispiel weist das zweite Ausführungsbeispiel ein erstes Federelement 11 und ein zweites Federelement 12 auf. Das erste Federelement 11 ist zwischen dem ersten Pedal 2 und einem Rahmen 10 des Antriebs angeordnet. Das zweite Federelement 12 ist zwischen dem zweiten Pedal 3 und dem Rahmen 10 angeordnet. Die Federelemente 11, 12 dienen zur Rückstellung der Pedale 2, 3 in die in Figur 2 gezeigte Ausgangsposition (Ruheposition). Durch das Vorsehen der Rückstellelemente muss ein Fahrer daher nicht mehr wie im ersten Ausführungsbeispiel zur Verzögerung seiner Füße eine Kraft entgegen der Bewegungsrichtung ausüben, was zu einem Dehnen der Muskeln des Fahrers entgegen ihrer Kraft führt (exzentrische Kontraktion der Muskeln). Somit kann bei diesem Ausführungsbeispiel ein besserer Wirkungsgrad des Systems umfassend Muskelfasern, Mechanik und elektrische Maschine, erreicht werden. Weiterhin bewirken die Federelemente 11, 12, dass bei einem Richtungswechsel einer Bewegung des Zugmittels 6 diese Totpunkte schneller überwunden werden können. Da die elektrische Maschine bei dem Richtungswechsel ebenfalls ihre Drehrichtung ändert, kann durch schnellere Überwindung der Totpunkte ein Wirkungsgrad der elektrischen Maschine im Generatorbetrieb verbessert werden.

## Patentansprüche

1. Linear-Antrieb eines pedalgetriebenen Fahrzeugs, umfassend:
- wenigstens ein erstes Pedal (2),
- wenigstens eine erste Umlenkrolle (4) und eine zweite Umlenkrolle (5),
- wenigstens ein um die erste Umlenkrolle (4) und die zweite Umlenkrolle (5) umlaufendes Zugmittel (6),
- eine elektrische Maschine (9) mit einer Rotationswelle (19), wobei die Rotationswelle (19) mit der ersten Umlenkrolle (4) verbunden ist, und
- eine Steuereinheit (16), welche eingerichtet ist, die elektrische Maschine (9) als Generator oder als Elektromotor zu betreiben.

2. Linear-Antrieb nach Anspruch 1, **dadurch gekennzeichnet, dass** die Steuereinheit (16) eingerichtet ist, die elektrische Maschine (9) in Abhängigkeit einer Position des ersten Pedals (2) als Generator oder als Elektromotor zu betreiben.

3. Linear-Antrieb nach einem der vorhergehenden Ansprüche, **dadurch gekennzeichnet, dass** die Steuereinheit (16) eingerichtet ist, die elektrische Maschine (9) vor Erreichen eines Umkehrpunktes (A, D) des Linear-Antriebs (6) als Generator zu betreiben.

4. Linear-Antrieb nach einem der vorhergehenden Ansprüche, **dadurch gekennzeichnet, dass** die Steuereinheit (16) eingerichtet ist, die elektrische Maschine (9) nach Erreichen eines Umkehrpunktes (A, D) des Linear-Antriebs als Elektromotor zu betreiben.

5. Linear-Antrieb nach einem der vorhergehenden Ansprüche, **dadurch gekennzeichnet, dass** die Steuereinheit (16) eingerichtet ist, die elektrische Maschine in Abhängigkeit einer Bewegungsgeschwindigkeit des Pedals (2) als Generator oder als Elektromotor zu betreiben.

6. Linear-Antrieb nach einem der vorhergehenden Ansprüche, **dadurch gekennzeichnet, dass** die Steuereinheit eingerichtet ist, eine Position des Pedals (2), basierend auf einer Rotation der elektrischen Maschine (9) zu ermitteln.

7. Linear-Antrieb nach einem der vorhergehenden Ansprüche, **dadurch gekennzeichnet, dass** die Steuereinheit (16) eingerichtet ist, die elektrische Maschine in Abhängigkeit einer Trittfrequenz als Generator oder als Elektromotor zu betreiben.

8. Pedalgetriebenes Fahrzeug, insbesondere Elektrofahrrad, umfassend einen Linear-Antrieb nach einem der vorhergehenden Ansprüche.

9. Verfahren zum Betreiben eines Linear-Antriebs (1) eines pedalgetriebenen Fahrzeugs, wobei der Linear-Antrieb (1) wenigstens ein Pedal (2), ein über Umlenkrollen (4, 5) geführtes Zugmittel (6), eine elektrische Maschine (9) und eine Steuereinheit (16) umfasst, wobei die Steuereinheit (16) die elektrische Maschine (9) als Generator oder als Elektromotor betreibt.

10. Verfahren nach Anspruch 9, **dadurch gekennzeichnet, dass** die Steuereinheit (16) die elektrische Maschine (9) in Abhängigkeit einer Position des Pedals (2) und/oder in Abhängigkeit einer Bewegungsgeschwindigkeit des Pedals (2) und/oder in Abhängigkeit einer Trittfrequenz des Fahrers (17) als Generator oder als Elektromotor betreibt.
